# EUROPEAN PATENT SPECIFICATION

(11) **EP 3 731 359 B1**
(45) Date of publication and mention of the grant of the patent: **20.07.2022**
(21) Application number: 20171110.8
(22) Date of filing: 23.04.2020
(51) Int. Cl.: H02G 3/12, H02G 3/20

(54) **MOUNTING SYSTEM FOR CEILING OR WALL DEVICE**
MONTAGESYSTEM FÜR DECKEN- ODER WANDVORRICHTUNG
SYSTÈME DE MONTAGE POUR DISPOSITIF DE PAROI OU DE PLAFOND

(30) Priority: 23.04.2019 BE 201905269
(43) Date of publication of application: 28.10.2020
(73) Proprietor: Niko NV, 9100 Sint-Niklaas (BE)
(72) Inventor: COOREMAN, Tom, 9310 Meldert (Aalst) (BE)
(74) Representative: DenK iP bv

(56) References cited:
- EP-A1- 3 297 110
- WO-A1-2017/091839
- DE-U1- 20 218 418
- GB-A- 2 509 727
- US-A- 4 053 082

## Description

### Technical Field of the invention

The present invention relates to a mounting system for a ceiling or wall device.

### Background of the invention

In conventional mounting systems for installing ceiling or wall devices, such as sensors, detectors, and lighting fixtures, in suspended ceiling structures, it is known to secure such devices in position with help of screws or other fastening elements and to connect such devices to a suitable source of electrical power above the suspended ceiling structures. This installation procedure may get complex with complex ceiling structures. Also, use of different materials to form the ceiling or ceiling structures may result in different thickness of the ceiling or the ceiling structures. Such scenario may further pose problems with respect to use of the fastening elements to fix the mounting system to the ceiling. In cases where decorative wall panels are used with the ceiling or wall devices, securing the wall panels becomes a long and tedious job as it involves use of multiple fastening elements. In addition, the fastening elements may be exposed to the outside, which may affect aesthetic appearance of such wall panels.

EP Patent Application 3 297 110 describes a mounting system for a ceiling or wall device, comprising a ceiling or wall part and a device holding part to receive the ceiling or wall device. The ceiling or wall part and the device holding part comprise connecting means to removably fix the device holding part to the ceiling or wall part by means of a combination of linear movement and rotating movement.

Although the mounting system of EP Patent Application 3 297 110 overcomes the need of using fastening elements, such as screws, to fix the ceiling or wall part to the ceiling or wall, different temperature conditions, for example high temperature differences, may cause the ceiling or wall device to loosen. In cases where the ceiling or wall device is a sensor or detector, for example a proximity sensor, it may be required to retain the sensor in a desired orientation inside the device holding part to achieve proper functioning of the sensor. However, such environmental conditions may eventually result in tilting or displacement of the sensor or detector or may even cause the sensor or the detector to fall out of the ceiling, which is not desired.

### Summary of the invention

According to the present invention, a mounting system for mounting a ceiling or wall device in or on a ceiling or a wall is provided. The ceiling or wall device may be one of a sensor, a detector, a controller, an actuator, a lighting device, or a speaker. The mounting system comprises a ceiling or wall part adapted to removably attach in or on the ceiling or the wall and a device holding part adapted to receive the ceiling or wall device. The ceiling or wall part and the device holding part comprise mating connecting means adapted to removably fix the device holding part to the ceiling or wall part by means of a combination of a linear movement and a rotating movement such that, when mounted, an inner surface of the ceiling or wall part is facing an outer surface of the device holding part. Further, the device holding part comprises multiple ribs extending longitudinally on the outer surface thereof, and the ceiling or wall part comprises at least one tooth on the inner surface thereof, adapted to engage with spacing defined between two adjacent ribs of the device holding part.

With the above configuration of the mounting system, the device holding part may be easily installed to the ceiling or wall with the combination of the linear movement and the rotating movement. The ribs located on the outer surface of the device holding part adds to the strength of the device holding part, thereby making the mounting system robust. Further, because of the engagement of the tooth and the ribs, the ceiling or wall device may be prevented from being tilted due to environmental conditions.

According to embodiments of the invention, the mounting system may comprise a first friction lining located on the tooth of the ceiling or wall part. According to other embodiments, the mounting system may comprise a second friction lining located on an inner surface of the ceiling or wall part. The second friction lining may, according to embodiments of the invention, be located above the tooth.

According to embodiments of the invention, the mating connecting means may comprise a first part located on the ceiling or wall part and a second part located on the device holding part. The first part of the mating connecting means may comprise at least one barb, for example a screw thread, extending along the inner surface of the ceiling or wall part. The second part of the mating connecting means may comprise at least one partial screw thread adapted to engage with the at least one barb of the first part. In addition, the at least one partial screw thread also engages with the tooth of the ceiling or wall part during the rotating movement. Engagement of the first part and the second part during the linear movement and the rotating movement allows to removably fix the device holding part to the ceiling or wall part. As such, usage of fastening elements, such as screws, may be eliminated.

In embodiments of the present invention, the at least one barb may extend in an inclined manner for a predefined length at a predefined helix angle on the inner surface. The at least one tooth may also be oriented at the predefined helix angle. This same orientation of the barb and the tooth avoids obstruction during rotation.

The device holding part comprises a flange that extends in a first plane and a cylinder that extends from the flange in a second direction perpendicular to the first plane. The flange may comprise a first surface adapted to face the ceiling or wall, and a second surface opposite to the first surface and adapted to face away from the ceiling or wall. According to embodiments of the invention, the first surface of the flange may comprise a third friction lining. According to another embodiment, the first surface of the flange may comprise multiple grooves adapted to form a rough surface. In yet another embodiment, an outer surface of the cylinder of the device holding part, which is adapted to engage with the ceiling or wall part, may comprise a fourth friction lining.

According to embodiments of the invention, at least one of the first friction lining, the second friction lining, the third friction lining, or the fourth friction lining may comprise an elastomer, such as rubber. At least one or more of these friction linings may be provided to enhance the friction at portions where the device holding part contacts the ceiling or wall part.

Other features and aspects of this invention will be apparent from the following description and the accompanying drawings.

### Brief Description of the Drawings

FIG. 1 illustrates an exploded view of a mounting system shown in association with a ceiling or wall, according to an embodiment of the present invention;
FIG. 2 illustrates a perspective view of a ceiling or wall part of the mounting system, according to an embodiment of the present invention;
FIG. 3 illustrates an elevation view of a device holding part of the mounting system, according to an embodiment of the present invention;
FIG. 4A illustrates an enlarged view of a tooth of the ceiling or wall part, according to an embodiment of the present invention;
FIG. 4B illustrates a cross sectional view showing engagement of the tooth with ribs of the device holding part, according to an embodiment of the present invention;
FIG. 5A illustrates a portion of the ceiling or wall part with a first friction lining, according to an embodiment of the present invention;
FIG. 5B illustrates a portion of the ceiling or wall part with a second friction lining, according to an embodiment of the present invention;
FIG. 6A illustrates an elevation view of the device holding part comprising a third friction lining, according to an embodiment of the present invention;
FIG. 6B illustrates an elevation view of the device holding part comprising a fourth friction lining, according to an embodiment of the present invention; and
FIG. 7 illustrates a perspective view of the device holding part comprising a rough surface on a flange, according to an embodiment of the present invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also comprises indirect contact between part A and part B, in other words also comprises the case where intermediate parts are present in between part A and part B.

Not all embodiments of the invention comprise all features of the invention. In the following description and claims, any of the claimed embodiments can be used in any combination.

Reference will now be made in detail to specific embodiments or features, examples of which are illustrated in the accompanying drawings. Wherever possible, corresponding or similar reference numbers will be used throughout the drawings to refer to the same or corresponding parts. Moreover, references to various elements described herein, are made collectively or individually when there may be more than one element of the same type. However, such references are merely exemplary in nature. It may be noted that any reference to elements in the singular may also be construed to relate to the plural and vice-versa without limiting the scope of the invention to the exact number or type of such elements unless set forth explicitly in the appended claims. No element, act, or instruction used herein should be construed as critical or essential unless explicitly described as such. Also, as used herein, the articles "a" and "an" are intended to comprise one or more items and may be used interchangeably with "one or more".

The present invention provides a mounting system for mounting a ceiling or wall device in or on a ceiling or a wall. The mounting system comprises a ceiling or wall part adapted to removably attach in or on the ceiling or the wall and a device holding part adapted to receive the ceiling or wall device. The ceiling or wall part and the device holding part comprise connecting means adapted to removably fix the device holding part to the ceiling or wall part by means of a combination of a linear movement and a rotating movement. The device holding part comprises a plurality of ribs extending longitudinally on an outer surface thereof, and the ceiling or wall part comprises a tooth adapted to engage with spacing defined between two adjacent ribs of the device holding part.

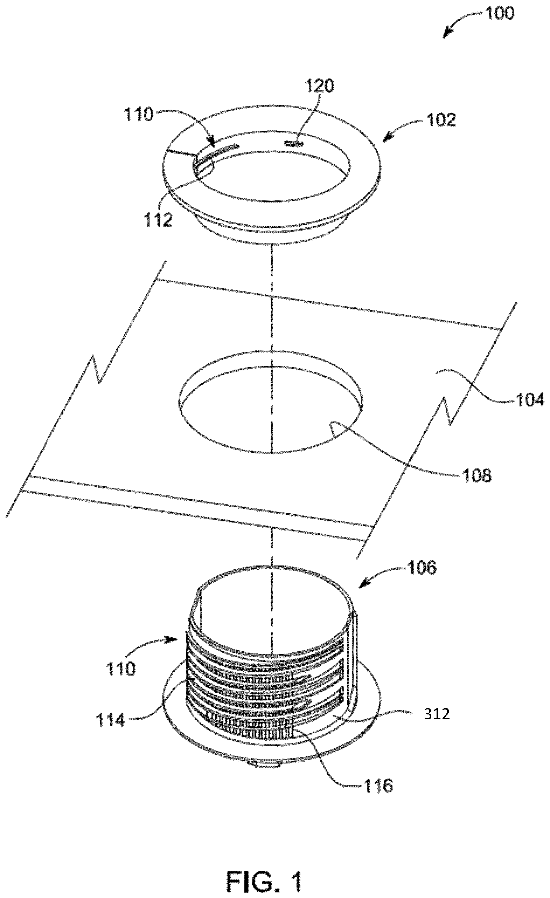

Referring to FIG. 1, a mounting system 100 according to embodiments of the invention is illustrated. The mounting system 100 is used for mounting a ceiling or wall device (not shown) which comprises, but is not limited to, a sensor, a detector, a controller, an actuator, a lighting device, or a speaker. The mounting system 100 comprises a ceiling or wall part 102 which is positioned at a rear portion of a ceiling or wall 104 and is brought in contact with the ceiling or wall 104 at the time of installing the mounting system 100. As used herein, the phrase 'rear portion' may be understood as a region above the ceiling that is not visible to a user. However, with respect to a wall, the phrase 'rear portion' refers to a region within or behind the wall. Accordingly, 'front portion' refers to a region visible on the ceiling or the wall, to the user. The mounting system 100 further comprises a device holding part 106 adapted to receive the ceiling or wall device. The ceiling or wall 104 defines an aperture 108 through which the device holding part 106 may be removably attached to the ceiling or wall part 102.

The ceiling or wall part 102 and the device holding part 106 comprise mating connecting means 110 adapted to removably fix the device holding part 106 to the ceiling or wall part 102 by means of a combination of linear movement and rotating movement. Specifically, the mating connecting means 110 comprises a first part 112 located on the ceiling or wall part 102 and a second part 114 located on the device holding part 106. During the linear movement and the rotating movement, the first part 112 and the second part 114 of the connecting means 110 engage with one another to allow the device holding part 106 to be removably attached with the ceiling or wall part 102. With such combination of the linear and rotating movements, distance between the device holding part 106 and the ceiling or wall part 102 can be adjusted.

According to one embodiment, the device holding part 106 comprises multiple ribs 116 extending longitudinally on an outer surface 312 of the device holding part 106. The ceiling or wall part 102 comprises, on an inner surface 208 thereof, a tooth 120 adapted to engage with spacings defined between two adjacent ribs 116 of the device holding part 106. Such engagement of the tooth 120 and the ribs 116 allows the ceiling or wall device, such as the sensor or the detector, to remain in an installed position and desired orientation and, prevents any changes to the orientation due to change in environmental conditions.

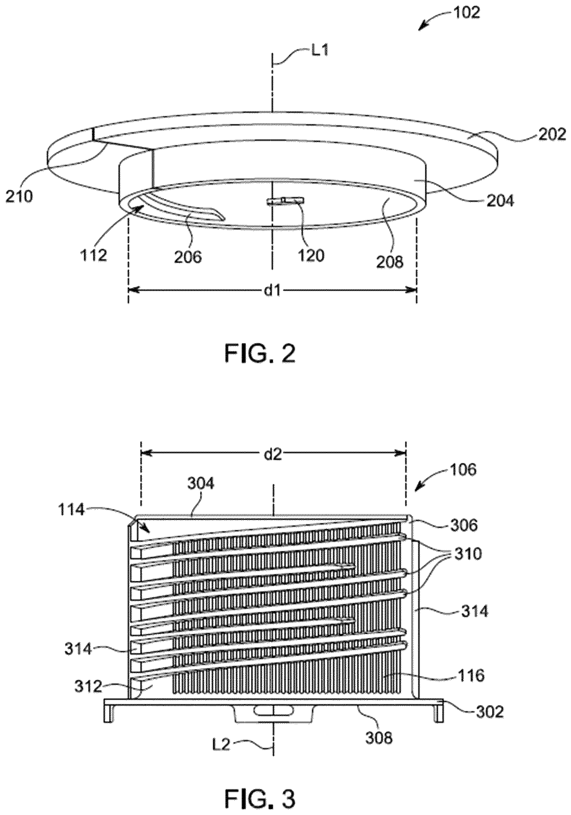

FIG. 2 illustrates a perspective view of the ceiling or wall part 102, according to an embodiment of the present invention. According to this embodiment, the ceiling or wall part 102 is implemented as a cylindrical structure that comprises a flange 202 extending in a first plane and a cylinder 204 extending from the flange 202 in a second direction perpendicular to the first plane. The cylinder 204 of the ceiling or wall part 102 is formed as a hollow structure having an inner diameter "d1", as shown in FIG. 2.

As described earlier with respect to FIG. 1, the first part 112 of the connecting means 110 is located on the ceiling or wall part 102 and may comprise, at its inner surface 208, at least one barb 206. Preferably, the ceiling or wall part 102 may comprise a single barb 206 that extends along an inner surface 208 of the ceiling or wall part 102. For example, the barb 206 may be implemented as a partial screw thread that extends in an inclined manner for a predefined length at a predefined helix angle on the inner surface 208. The phrase 'partial screw thread' as used herein refers to a screw thread that extends only for the predefined length which is less than a circumference of the inner surface 208. According to embodiments of the invention, the first part 112 may comprise two partial screw threads, each positioned diagonally opposite to the other on the inner surface 208 of the ceiling or wall part 102.

The ceiling or wall part 102 also comprises at its inner surface 208 a tooth 120. According to embodiments of the invention, the tooth 120 may be located between the ends of the barb 206 of the ceiling or wall part 102. According to other embodiments, the tooth 120 may be provided on the barb 206. The tooth 120 may be inclined at the predefined helix angle. According to embodiments of the invention, a slit 210 may be formed along the flange 202 and the cylinder 204 of the ceiling or wall part 102. The term 'slit' used herein may be understood as a cut formed in the material of the ceiling or wall part. The slit 210 allows a user to deform the ceiling or wall part 102 by pulling ends of the flange 202 in opposite direction along a longitudinal axis "L1".

FIG. 3 illustrates an elevation view of the device holding part 106, according to an embodiment of the present invention. The device holding part 106 may also be implemented as a cylindrical structure comprising a flange 302 extending in the first plane and a cylinder 304 extending from the flange 302 in a second direction perpendicular to the first plane. The cylinder 304 of the device holding part 106 is formed as a hollow structure having an inner diameter "d2" less than the inner diameter "d1" of the ceiling or wall part 102, and a longitudinal axis "L2". The hollow structure allows the ceiling or wall device to be housed within the device holding part 106, such that electrical leads from the ceiling or wall device may be directed via the first end 306.

As described earlier with reference to FIG. 1, the second part 114 of the connecting means 110 is located on the device holding part 106 and comprises at least one partial screw thread 310. In the preferred embodiment, the second part 114 comprises multiple partial screw threads 310 extending on an outer surface 312 of the device holding part 106. Multiple bars 314 extend longitudinally on the outer surface 312, to add strength to the device holding part 106. In one embodiment, each partial screw thread 310 may start from one bar 314 and end before a diagonally opposite bar 314. Further, each partial screw thread 310 is inclined at the predefined helix angle equal to that of the barb 206 of the ceiling or wall part 102.

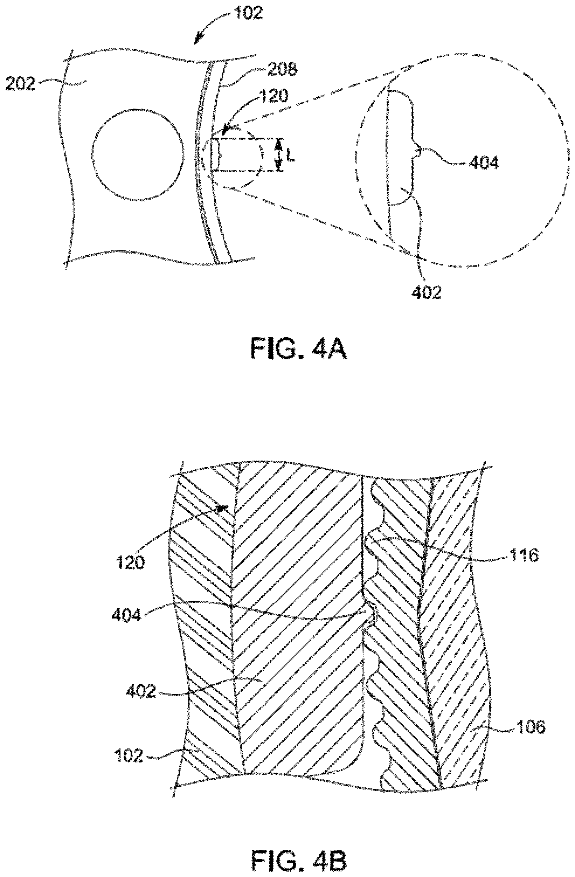

The device holding part 106 further comprises ribs 116 extending longitudinally on the outer surface 312 thereof. A plurality of such adjacent ribs 116 is spaced equidistant from one another. When a cross-section is taken along a plane parallel to the flange 302, the ribs 116 appear like a continuous stretch of crests and troughs (see FIG. 4B).

FIG. 4A illustrates a top view of a portion of the ceiling or wall part 102. According to embodiments of the invention, the tooth 120 may comprise a base portion 402, and a protrusion 404 extending from the base portion 402 and away from the inner surface 208 of the ceiling or wall part 102. The tooth 120 may extend for a predefined length "L" along the inner surface 208. According to another embodiment, the tooth 120 may comprise the protrusion 404 alone that extends from the inner surface 208. In one example, the tooth 120 may be formed integral with the ceiling or wall part 102. In another example, the tooth 120 may be removably attached to the inner surface 208 of the ceiling or wall part 102.

FIG. 4B illustrates an enlarged view of engagement of the tooth 120 on the ceiling or wall part 102 and the ribs 116 on the device holding part 106, according to an embodiment of the present invention. For the purpose of clarity and understanding, FIG. 4B is described in conjunction with FIG.1 to FIG. 4A.

The ceiling or wall part 102 may be inserted through the aperture 108 formed in the ceiling or wall 104. In cases where the diameter of the aperture 108 is less than an outer diameter of the flange 202 of the ceiling or wall part 102, the ceiling or wall part 102 may be deformed at the slit 210 (see FIG. 2). Ends of the flange 202 defining the slit 210 may be pulled in opposite directions along the longitudinal axis "L1" of the ceiling or wall part 102 to achieve a spiral structure. Material of the ceiling or wall part 102 may be such that it allows the spiral structure to regain its original shape when released. As such, the ceiling or wall part 102 may be flexible and may accordingly be free from any fracture during the deformation. The ceiling or wall part 102 may be inserted through the aperture 108 to place it behind the ceiling or wall 104. In order to removably fix the device holding part 106 to the ceiling or wall part 102, the cylinder 304 of the device holding part 106 may be moved towards the cylinder 204 of the ceiling or wall part 102. Since the outer diameter "d2" of the cylinder 304 of the device holding part 106 is less than the inner diameter "d1" of the cylinder 204 of the ceiling or wall part 102, the cylinder 304 of the device holding part 106 may be inserted into the cylinder 204 of the ceiling or wall part 102. Thereafter, clockwise rotation of the device holding part 106 may allow the partial screw threads 310 to engage with the barb 206 of the ceiling or wall part 102.

Rotation of the device holding part 106 in the ceiling or wall part 102 results in linear movement of the device holding part 106 into the ceiling or wall part 102. Therefore, the combination of linear movement and the rotating movement aids in removably fixing the device holding part 106 to the ceiling or wall part 102.

During the rotating movement, the partial screw threads 310 on the device holding part 106 are aligned with the tooth 120 on the ceiling or wall part 102. In order to allow the partial screw threads 310 to rotate past the tooth 120, the tooth 120 may need to be oriented at the predefined helix angle of the partial screw threads 310. Such orientation of the tooth 120 guides the movement of the partial screw threads 310 without causing any obstruction during rotation. In addition, a thickness of the tooth 120 along the longitudinal axis "L1" should be less than a pitch of the partial screw threads 310, so that the tooth 120 lies between two adjacent partial screw threads 310 while the device holding part 106 is rotated. Further, during the rotating movement, contact of the ribs 116 on the device holding part 106 with the protrusion 404 of the tooth 120 results in a ratchet-like contact. In order to further enhance user convenience while rotating the device holding part 106 into the ceiling or wall part 102, the protrusion 404 of the tooth 120 extends inclined from the base portion 402 thereof in a direction of rotation. This inclination allows crest portions of the ribs 116 to easily rub and move past the protrusion 404 until the device holding part 106 is rotated to desired number of rotations. Once the rotation is stopped, the protrusion 404 of the tooth 120 engages with spacing defined between two adjacent ribs 116 of the device holding part 106. According to embodiments of the invention, the tooth 120 may be made of a material that renders the protrusion 212 of the tooth 120 flexible enough to withstand rubbing action of the ribs 116 of the device holding part 106. The engagement of the tooth 120 with the ribs 116 of the device holding part 106 rigidly holds the device holding part 106 in position and prevents any tilt thereof, thereby eliminating any tilt or change in orientation of the ceiling device housed in the mounting structure 100.

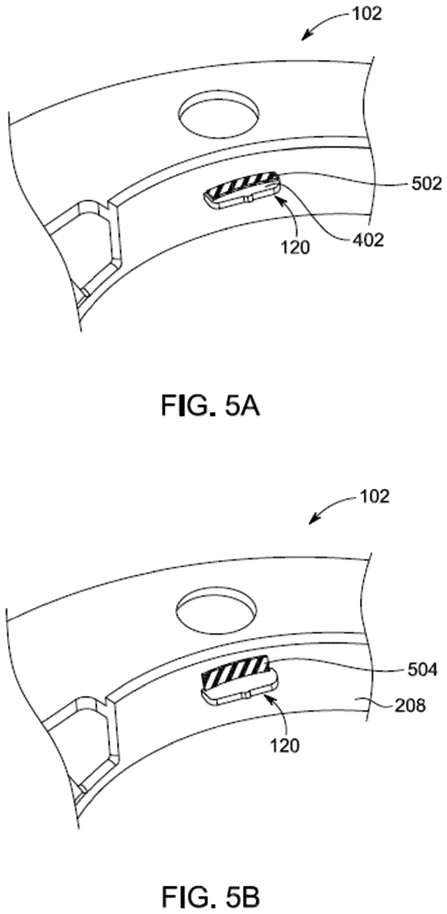

According to another embodiment, the ceiling or wall part 102 may comprise two or more teeth adapted to engage with the spacings defined between ribs 116 of the device holding part 106. The multiple teeth configuration of the mounting structure 100 adds to the rigidness with which the device holding part 106 is engaged with the ceiling or wall part 102. FIG. 5A illustrates a perspective view of a portion of the ceiling or wall part 102 comprising a first friction lining 502, according to an embodiment of the present invention. The first friction lining 502 may be located on the tooth 120 of the ceiling or wall part 102. In particular, the first friction lining 502 may be located on the base portion 402 of the tooth 120. In one example, the first friction lining 502 may be located on a top surface of the base portion 402 that faces away from the ceiling or wall 104. In another example, the first friction lining 502 may be located on a bottom surface of the base portion 402 that faces the ceiling or wall 104. In yet another example, the first friction lining 502 may be provided on both the top surface and the bottom surface of the base portion 402 of the tooth 120. However, it should be noted that the thickness of the first friction lining 502 and the thickness of the tooth 120 together should to be less than the pitch of the partial screw threads 310 of the device holding part 106, to allow uninterrupted rotation of the device holding part 106. According to embodiments of the invention, the first friction lining 502 may be in form of a strap and may comprise an elastomer, such as rubber. Adhesives can be used to stick the first friction lining 502 to the tooth 120. Since the first friction lining 502 is located at surfaces where the device holding part 106 contacts the ceiling or wall part 102, friction between the two parts may be enhanced. Such enhancement in friction also aids in retaining the device holding part 106 intact. In cases where the ceiling or wall part 102 comprises two or more teeth, then friction lining may be provided on each tooth.

FIG. 5B illustrates a perspective view of a portion of the ceiling or wall part 102 comprising a second friction lining 504, according to an embodiment of the present invention. The second friction lining 504 is located on the inner surface 208 of the ceiling or wall part 102 and may either be provided in lieu of the first friction lining 502 or in addition to the first friction lining 502. Since the second friction lining 504 is provided on the inner surface 208 of the ceiling or wall part 102, thickness of the second friction lining 504 may need to be such that the partial screw threads 310 of the device holding part 106 contact the second friction lining 504. Such contact also adds to the friction enhancement and to retain the device holding part 106 intact. The second friction lining 504 may also comprise elastomer, such as rubber.

According to embodiments of the invention, the first friction lining 502 and the second friction lining 504 may be provided as one single friction lining which may be bent along the inner surface 208 of the ceiling or wall part 102 and on the base portion 402 of the tooth 120. According to another embodiment, the ceiling or wall part 102 may comprise multiple second friction linings 504 located along the inner surface 208 thereof.

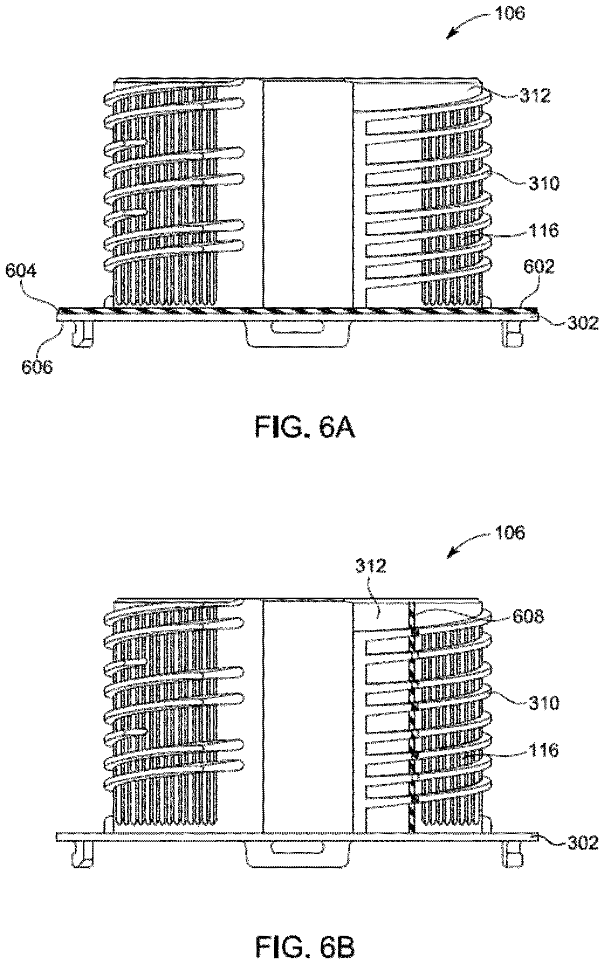

FIG. 6A illustrates an elevation view of the device holding part 106 comprising a third friction lining 602, according to an embodiment of the present invention. The flange 302 of the device holding part 106 comprises a first surface 604 adapted to face the ceiling or wall 104 and a second surface 606, opposite the first surface 604, adapted to face away from the ceiling or wall 104. In other words, the second surface 606 faces a room or enclosure in which the mounting system is installed and visible to a user. The first surface 604 of the flange 302 comprises the third friction lining 602 to enhance friction between the flange 302 and the ceiling or wall 104. Besides enhancing friction, the third friction lining 602 also prevents dust particles from settling in space between the flange 302 of the device holding part 106 and the ceiling or wall 104.

FIG. 6B illustrates an elevation of the device holding part 106 having a fourth friction lining 608, according to an embodiment of the present invention. The outer surface 312 of the device holding part 106 is adapted to engage with the ceiling or wall part 102 and comprises the fourth friction lining 608. According to embodiments of the invention, the fourth friction lining 608 may be located at a region where the ribs 116 are absent. According to another embodiment, the device holding part 106 may comprise multiple fourth friction linings 608 located along the outer surface 312 thereof and extending along a length of the cylinder 304 of the device holding part 106. The third friction lining 602 and the fourth friction lining 608 may comprise elastomer, such as rubber.

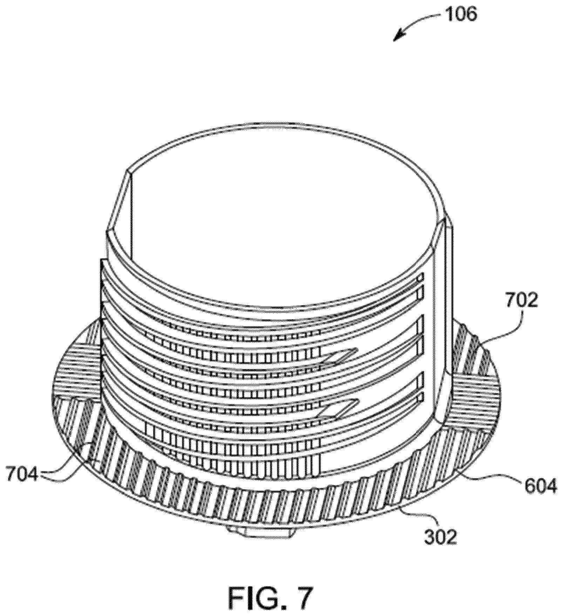

FIG. 7 illustrates a perspective view of the device holding part 106 having a rough surface 702. According to one embodiment, the first surface 604 of the flange 302 may comprise multiple grooves 704 adapted to form the rough surface 702. In an example, the grooves 704 can be formed by, not limiting to, a surface grinding process or drilling process. The rough surface 702 helps the flange 302 of the device holding part 106 to rigidly abut against the ceiling or wall 104.

Embodiments of the present invention provide the mounting system 100 for mounting the ceiling or wall device in the ceiling 100. The ceiling or wall device may be one of the sensor, detector, controller, actuator, lighting device, or speaker. As such, the mounting system 100 finds applicability in domestic environments, such as house and commercial buildings. Because the mounting system 100 has a minimum number of components and complexity, the mounting system 100 may be easily manufactured at minimum cost. Further, the engagement of the tooth or teeth 120 on the ceiling or wall part 102 with the ribs 116 on the device holding part 106 aims to retain the device holding part 106 intact without any tilt during changes in environmental conditions. As such, any disturbance to orientation of the ceiling or wall device, specifically the sensor or the detector, may be eliminated.

Besides the engagement of the tooth 120 of the ceiling or wall part 102 with the ribs 116 of the device holding part 106, the friction linings enhance the friction between the ceiling or wall part 102 and the device holding part 106. Such friction aids in rigid contact between the ceiling or wall part 102 and the device holding part 106, thereby preventing the device holding part 106 to tilt due to change in environment.

While aspects of the present invention have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present invention as determined based upon the claims and any equivalents thereof.

## Claims

1. A mounting system (100) for mounting a ceiling or wall device in or on a ceiling (104) or a wall, the mounting system (100) comprising:
- a ceiling or wall part (102) adapted to removably attach in or on the ceiling (104) or the wall; and
- a device holding part (106) adapted to receive the ceiling or wall device, the device holding part (106) comprises a flange (302) extending in a first plane and a cylinder (304) extending from the flange (302) in a direction perpendicular to the first plane,
the ceiling or wall part (102) and the device holding part (106) comprising mating connecting means (110) adapted to removably fix the device holding part (106) to the ceiling or wall part (102) by means of a combination of a linear movement and a rotating movement, such that, when mounted, an inner surface (208) of the ceiling or wall part (102) is facing an outer surface (312) of the device holding part (106),
**characterized in that**
- the device holding part (106) comprises a plurality of ribs (116) extending longitudinally on the outer surface (312) thereof, adjacent ribs (116) thereby being spaced equidistant from one another, the ribs (116) appearing, when a cross-section is taken along a plane parallel to the flange (302), like a continuous stretch of crests and troughs, and
- the ceiling or wall part (102) comprises at least one tooth (120) on the inner surface (208) thereof, adapted to engage with a spacing defined between two adjacent ribs (116) of the device holding part (106).

2. The mounting system (100) according to claim 1, further comprising a first friction lining (502) located on the tooth (120) of the ceiling or wall part (102).

3. The mounting system (100) according to any of the preceding claims, further comprising a second friction lining (504) located on an inner surface (208) of the ceiling or wall part (102).

4. The mounting system (100) according to any one of the preceding claims, wherein the connecting means (110) comprises:
- a first part (112) located on the ceiling or wall part (102) and comprising at least one barb (206) extending along the inner surface (208) of the ceiling or wall part (102); and
- a second part (114) located on the device holding part (106) and comprising at least one partial screw thread (310) adapted to engage with the at least one barb (206) of the first part (112) and with the tooth (120) of the ceiling or wall part (102).

5. The mounting system (100) according to claim 4, wherein the at least one barb (206) extends in an inclined manner for a predefined length at a predefined helix angle on the inner surface (208), and the at least one tooth (120) is also oriented at the predefined helix angle.

6. The mounting system (100) according to any of the previous claims, wherein a first surface (604) of the flange (302) is adapted to face the ceiling (104) or the wall and comprises a third friction lining (602).

7. The mounting system (100) according to any of previous claim, wherein the outer surface (312) of the cylinder (304) is adapted to engage with the ceiling or wall part (102) and comprises a fourth friction lining (608).

8. The mounting system (100) according to claims 2, 3, 6 or 7, wherein at least one of the first friction lining (502), the second friction lining (504), the third friction lining (602), or the fourth friction lining (608) comprises an elastomer.

9. The mounting system (100) according to claim 6 to 8, wherein the first surface (604) of the flange (302) comprises a plurality of grooves (704) adapted to form a rough surface (702).

## Patentansprüche

1. Montagesystem (100) zum Montieren einer Decken- oder Wandvorrichtung in oder an einer Decke (104) oder einer Wand, wobei das Montagesystem (100) Folgendes umfasst:
- ein Decken- oder Wandteil (102), das angepasst ist, um in oder an der Decke (104) oder der Wand entfernbar angebracht zu werden; und
- ein Vorrichtungshalteteil (106), das angepasst ist, um die Decken- oder Wandvorrichtung aufzunehmen, wobei das Vorrichtungshalteteil (106) einen Flansch (302) umfasst, der sich in einer ersten Ebene erstreckt, und einen Zylinder (304), der sich aus dem Flansch (302) in einer Richtung senkrecht zu der ersten Ebene erstreckt,
wobei das Decken- oder Wandteil (102) und das Vorrichtungshalteteil (106) aneinanderpassende Verbindungsmittel (110) umfassen, die angepasst sind, um das Vorrichtungshalteteil (106) an dem Decken- oder Wandteil (102) mittels einer Kombination aus einer linearen Bewegung und einer rotierenden Bewegung derart entfernbar zu befestigen, dass, wenn montiert, eine Innenoberfläche (208) des Decken- oder Wandteils (102) einer Außenoberfläche (312) des Vorrichtungshalteteils (106) zugewandt ist,
**dadurch gekennzeichnet, dass**:
- das Vorrichtungshalteteil (106) mehrere Rippen (116) umfasst, die sich in Längsrichtung auf der Außenoberfläche (312) davon erstrecken, wobei dadurch die angrenzenden Rippen (116) äquidistant voneinander beabstandet sind, wobei die Rippen (116), wenn ein Querschnitt entlang einer Ebene parallel zu dem Flansch (302) genommen wird, wie ein fortlaufender Abschnitt von Spitzen und Tälern erscheinen, und
- das Decken- oder Wandteil (102) wenigstens einen Zahn (120) auf der Innenoberfläche (208) umfasst, der angepasst ist, um mit einem Abstand in Eingriff zu stehen, der zwischen zwei angrenzenden Rippen (116) des Vorrichtungshalteteils (106) definiert ist.

2. Montagesystem (100) nach Anspruch 1, das ferner einen ersten Reibbelag (502) umfasst, der sich auf dem Zahn (120) des Decken- oder Wandteils (102) befindet.

3. Montagesystem (100) nach einem der vorhergehenden Ansprüche, das ferner einen zweiten Reibbelag (504) umfasst, der sich auf einer Innenoberfläche (208) des Decken- oder Wandteils (102) befindet.

4. Montagesystem (100) nach einem der vorhergehenden Ansprüche, wobei das Verbindungsmittel (110) Folgendes umfasst:
- einen ersten Teil (112), der sich an dem Decken- oder Wandteil (102) befindet und wenigstens einen Widerhaken (206) umfasst, der sich entlang der Innenoberfläche (208) des Decken- oder Wandteils (102) erstreckt; und
- einen zweiten Teil (114), der sich an dem Vorrichtungshalteteil (106) befindet und wenigstens ein Teilschraubengewinde (310) umfasst, das angepasst ist, um mit dem wenigstens einen Widerhaken (206) des ersten Teils (112) und mit dem Zahn (120) des Decken- oder Wandteils (102) in Eingriff zu stehen.

5. Montagesystem (100) nach Anspruch 4, wobei sich der wenigstens eine Widerhaken (206) auf eine geneigte Weise für eine vordefinierte Länge in einem vordefinierten Neigungswinkel auf der Innenoberfläche (208) erstreckt und der wenigstens eine Zahn (120) ebenso an dem vordefinierten Neigungswinkel ausgerichtet ist.

6. Montagesystem (100) nach einem der vorhergehenden Ansprüche, wobei eine erste Oberfläche (604) des Flansches (302) angepasst ist, um der Decke (104) oder der Wand zugewandt zu sein und einen dritten Reibbelag (602) umfasst.

7. Montagesystem (100) nach einem der vorhergehenden Ansprüche, wobei die Außenoberfläche (312) des Zylinders (304) angepasst ist, um mit dem Decken- oder Wandteil (102) in Eingriff zu stehen, und einen vierten Reibbelag (608) umfasst.

8. Montagesystem (100) nach Anspruch 2, 3, 6 oder 7, wobei der erste Reibbelag (502), der zweite Reibbelag (504), der dritte Reibbelag (602) und/oder der vierte Reibbelag (608) ein Elastomer umfasst.

9. Montagesystem (100) nach Anspruch 6 bis 8, wobei die erste Oberfläche (604) des Flansches (302) mehrere Rillen (704) umfasst, die angepasst sind, um eine raue Oberfläche (702) auszubilden.

## Revendications

1. Système de montage (100) pour monter un dispositif de plafond ou de paroi dans ou sur un plafond (104) ou une paroi, le système de montage (100) comprenant :
- une partie de plafond ou de paroi (102) adaptée pour être installée de manière amovible dans ou sur le plafond (104) ou la paroi ; et
- une partie de maintien du dispositif (106) adaptée pour recevoir le dispositif de plafond ou de paroi, la partie de maintien du dispositif (106) comprend une bride (302) s'étendant dans un premier plan et un cylindre (304) s'étendant depuis la bride (302) dans une direction perpendiculaire au premier plan,
la partie de plafond ou de paroi (102) et la partie de maintien du dispositif (106) comprenant un moyen de liaison d'accouplement (110) adapté pour fixer de manière amovible la partie de maintien du dispositif (106) à la partie de plafond ou de paroi (102) au moyen d'une combinaison d'un mouvement linéaire et d'un mouvement de rotation, de telle sorte que, une fois montée, une surface intérieure (208) de la partie de plafond ou de paroi (102) fait face à une surface extérieure (312) de la partie de maintien du dispositif (106),
**caractérisé en ce que**
- la partie de maintien du dispositif (106) comprend une pluralité de nervures (116) s'étendant de manière longitudinale sur sa surface extérieure (312), les nervures adjacentes (116) étant ainsi espacées à égale distance les unes des autres, les nervures (116) apparaissant, lorsqu'une section transversale est prise le long d'un plan parallèle à la bride (302), comme un allongement continu de crêtes et de creux, et
- la partie de plafond ou de paroi (102) comprend au moins une dent (120) sur sa surface intérieure (208), adaptée pour venir en prise avec un espacement défini entre deux nervures adjacentes (116) de la partie de maintien du dispositif (106).

2. Système de montage (100) selon la revendication 1, comprenant en outre une première doublure de friction (502) située sur la dent (120) de la partie de plafond ou de paroi (102).

3. Système de montage (100) selon l'une quelconque des revendications précédentes, comprenant en outre une deuxième doublure de friction (504) située sur une surface intérieure (208) de la partie de plafond ou de paroi (102).

4. Système de montage (100) selon l'une quelconque des revendications précédentes, dans lequel le moyen de liaison (110) comprend :
- une première partie (112) située sur la partie de plafond ou de paroi (102) et comprenant au moins un ardillon (206) s'étendant le long de la surface intérieure (208) de la partie de plafond ou de paroi (102) ; et
- une seconde partie (114) située sur la partie de maintien du dispositif (106) et comprenant au moins un filetage partiel (310) apte à venir en prise avec l'au moins un ardillon (206) de la première partie (112) et avec la dent (120) de la partie de plafond ou de paroi (102).

5. Système de montage (100) selon la revendication 4, dans lequel l'au moins un ardillon (206) s'étend d'une manière inclinée sur une longueur prédéfinie à un angle d'hélice prédéfini sur la surface intérieure (208), et l'au moins une dent (120) est également orientée à l'angle d'hélice prédéfini.

6. Système de montage (100) selon l'une quelconque des revendications précédentes, dans lequel une première surface (604) de la bride (302) est adaptée pour faire face au plafond (104) ou à la paroi et comprend une troisième doublure de friction (602).

7. Système de montage (100) selon l'une quelconque des revendications précédentes, dans lequel la surface extérieure (312) du cylindre (304) est adaptée pour venir en prise avec la partie de plafond ou de paroi (102) et comprend une quatrième doublure de friction (608).

8. Système de montage (100) selon les revendications 2, 3, 6 ou 7, dans lequel la première doublure de friction (502), et/ou la deuxième doublure de friction (504), et/ou la troisième doublure de friction (602) et/ou la quatrième doublure de friction (608) comprend un élastomère.

9. Système de montage (100) selon les revendications 6 à 8, dans lequel la première surface (604) de la bride (302) comprend une pluralité de rainures (704) adaptées pour former une surface rugueuse (702).
